# EUROPEAN PATENT APPLICATION

(11) **EP 1 854 708 A1**
(43) Date of publication of application: **14.11.2007**
(21) Application number: 07107228.4
(22) Date of filing: 30.04.2007
(51) Int. Cl.: B62D 29/00, B60R 13/08

(54) **Reinforcing Pads for Motor Vehicle Panels**

(30) Priority: 09.05.2006 GB 0609082
(71) Applicant: Nissan Motor Manufacturing (UK) Ltd., Cranfield, Bedfordshire MK43 0DB (GB)
(72) Inventor: Mitchell, Simon, Cranfield, Bedfordshire MK43 0DB (GB)
(74) Representative: Hufton, Victoria Alice

(57) **Abstract**

A reinforcing pad (90) for a motor vehicle panel is provided. The reinforcing pad is penetrated by a plurality of air-releasing holes (32). The holes extend over at least a majority of the pad. The material of the pad is shrinkable upon curing to reduce the diameter of the holes. A ring of pad material surrounding and defining each hole is drawn inwardly as the diameter of the hole reduces.

## Description

The present invention relates to a reinforcing pad for a panel on a motor vehicle and, in particular, to a reinforcing pad for a motor vehicle door, boot or bonnet panel. The invention also relates to a motor vehicle panel provided with at least one reinforcing pad, and to a motor vehicle having at least one such panel or pad. Further, the invention relates to the manufacture of a motor vehicle panel reinforced by a pad, and to the manufacture of a motor vehicle having at least one such panel or pad.

Motor vehicle panels are designed to be as thin as possible to minimise their cost and weight. This applies especially to panels such as door, boot (trunk) or bonnet (hood) panels that have minimal load-bearing duty. Use of thin metal in motor vehicle panels can result in the panel flexing noticeably and undesirably in use of the vehicle, for example when a door is closed. Both the sound and the feel of door closing may be compromised as a result. This is an important factor in perceived quality and hence customer satisfaction. Moreover, an overly flexible panel is more likely to vibrate as the vehicle is being driven, hence being a potential source of noise or vibration experienced by the vehicle occupants.

To reduce unwanted flexing of a vehicle panel, it is known to apply a reinforcing pad to an inner side of the panel during vehicle manufacture. As a result, the panel is stiffened and its propensity to vibrate in use is reduced. This improves perceived quality and increases vehicle refinement.

In typical vehicle manufacturing processes, a reinforcing pad is attached to the inner side of a panel by applying the pad by adhesion. The pad is then rolled to promote adhesion and to expel air, and finally the pad is cured when the panel is heated following the application of paint.

To prevent air becoming trapped between the pad and the panel, the pad has an array of slits extending over much of its surface. The slits are arrayed in rows or columns and extend through the pad to allow air to escape during manufacture.

The pad is typically made from a butyl material such as styrene butadiene rubber. When cured, cross-linking in the material stiffens and tends to shrink the pad. Thus, during curing as the pad shrinks and stiffens, the slits in the pad close and the pad imparts stiffness to the panel. The pad imparts stiffness to the panel in different ways:
not only does the pad add thickness to the assembly of pad and panel, but also shrinkage of the pad puts the attached panel under compression.

A problem arises when the slits of the pad close, as the movement of their edges can cause the panel to buckle and distort. The distortions manifest themselves as ridges between the lines of slits. The ridges may be visible on the outer side of the stiffened panel.

The slits of the pad can be curved to reduce the severity of panel distortion, but this does not fully prevent visible distortion. Hence, an alternative solution is required.

In one aspect the present invention resides in a reinforcing pad for a motor vehicle panel, the reinforcing pad being penetrated by a plurality of air-releasing holes extending over at least a majority of the pad and the material of the pad being shrinkable upon curing to reduce the diameter of the holes, wherein a ring of pad material surrounding and defining each hole is drawn inwardly as the diameter of the hole reduces.

As the pad shrinks and stiffens during curing, the holes in the pad close and the pad imparts stiffness to the panel. As a hole closes, its edge is displaced inwardly as the material in the pad moves evenly inward. As a result the panel is not caused to buckle and distort and undesirable ridges are avoided.

Whilst the holes and the associated rings of material are preferably circular, they need not necessarily be precisely circular. The invention requires that pad material is drawn inwardly from all sides of the hole and preferably substantially equally from all sides of the hole. Other open, non-circular hole shapes such as octagons or hexagons are possible within the broad concept of the invention.

A further advantage resides in the present invention, as the holes in the pad will allow more air to escape for a given surface area than slits. This eases attachment of the pad to the panel and so increases production efficiency.

The number of holes and the pattern of the holes can be varied but it is particularly preferred that the holes are in an array.

It is also preferred that the holes are substantially equidistant from one another. If the spacing of the holes is even in all directions, then when the edges of the holes are displaced during curing, the majority of the material in the pad will move evenly.

It is further preferred that substantially all the holes of the pad have the same diameter. This further improves the uniformity of material displacement during curing.

It is additionally preferred that substantially all the holes in the panel have a diameter size in the range of 2-16mm. This is advantageous as the size of the holes affects other factors in the manufacturing process, for example heating time. A pad with holes larger than 16mm may require a longer heating time than required for the standard manufacture of a panels in the prior art.

The present invention extends to a motor vehicle panel having at least one reinforcing pad of the invention, and to a motor vehicle having at least one such panel reinforced by at least one such reinforcing pad.

The invention also resides in a method of manufacturing a heat-shrinkable reinforcing pad for a motor vehicle panel; comprising punching or drilling a plurality of air-releasing holes through the pad, the holes extending over at least a majority of the pad.

The invention extends to a method of manufacturing a motor vehicle panel reinforced by at least one reinforcing pad of the invention, and to a method of manufacturing a motor vehicle comprising at least one such panel reinforced by at least one such reinforcing pad.

The invention will now be described, by way of example only, with reference to the accompanying drawings in which:
Figure 1 is a plan view of a reinforcing pad with curved slits, known in the prior art;
Figure 2 is a schematic plan view showing distortions on a panel reinforced by the prior art pad of Figure 1;
Figure 3 is a plan view of a reinforcing pad in a first embodiment of the present invention; and
Figure 4 is a plan view of a reinforcing pad in a second, preferred embodiment of the present invention.

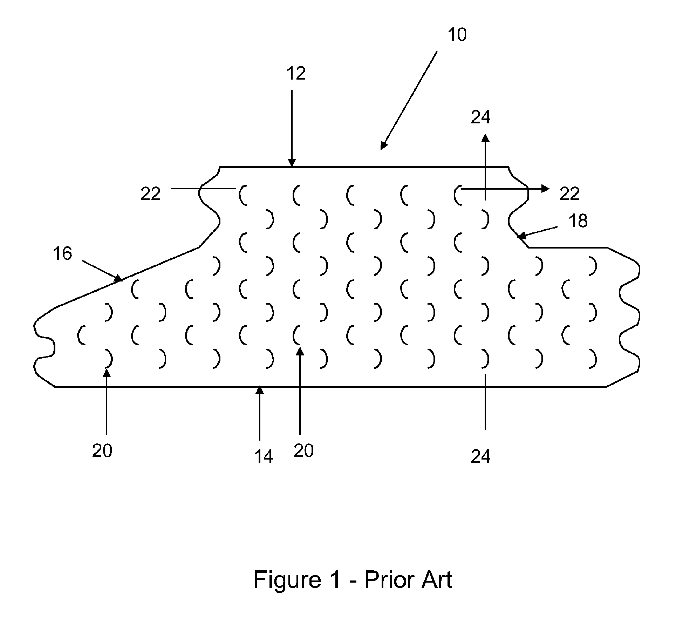

Referring to Figure 1, a reinforcing pad 10 known from the prior art is cut from a flexible sheet of a butyl material such as styrene butadiene rubber, optionally faced with woven glass fibre. The outline of the pad 10 is shaped to suit the space available inside a vehicle door panel, to which end the pad 10 has parallel upper and lower edges 12, 14 and irregular left and right edges 16, 18. The shape of the pad is not crucial to understanding the invention and is shown for illustration only.

The pad 10 is penetrated by an array of semi-elliptical curved slits 20, which array extends over the majority of the pad 10. In the embodiment shown, the slits 20 are aligned in eight rows 22 that are parallel to each other and to the upper and lower edges 12, 14 of the pad 10.

Convex sides of the slits 20 in the first, third, fifth and seventh rows 22 face the left edge 16 of the pad 10; conversely, convex sides of the slits 20 in the second, fourth, sixth and eighth rows 22 face the right edge 18 of the pad 10. The orientation of the slits 20 therefore alternates from one row 22 to the next.

The slits 20 are also arranged in staggered columns 24. Specifically, the similarly-oriented slits 20 in the first, third, fifth and seventh rows 22 are aligned in a first set of columns 24 and the slits 20 in the second, fourth, sixth and eighth rows 22 are aligned in a second set of columns 24 interspersed with the first set of columns 24. The columns 24 extend orthogonally with respect to the rows 22 and the upper and lower edges 12, 14 of the pad 10.

Thus, the slits 20 in each row 22 are positioned such that each slit is disposed diagonally with respect to the neighbouring slits of neighbouring rows. Strictly by way of example, the spacing between neighbouring slits 20 in the same row 22 may be 80 mm and the spacing between neighbouring slits 20 in neighbouring rows 22 may be 30 mm.

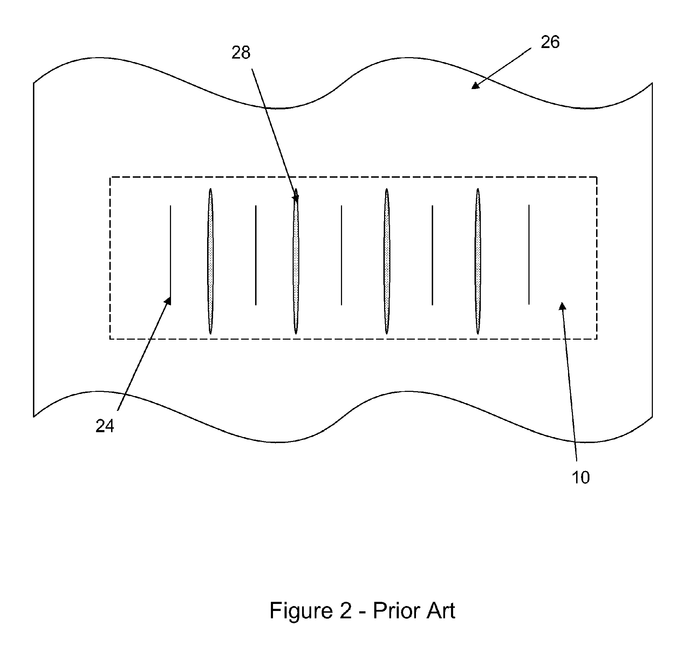

Figure 2 represents a vehicle panel 26 to which a pad 10 of the prior art has been applied on its inner side, following curing of the pad 10. Figure 2 shows the panel 26 from its exposed outer side and so shows the pad 10 in dashed lines.

For simplicity, the pad 10 in Figure 2 is shown as having five columns 24 of slits. The result of the slits closing during curing of the pad 10 is that the panel 26 has distorted to form four parallel vertical ridges 28 interspersed between the columns 24. Those ridges may be visible on the outer side of the panel 26, to the detriment of perceived quality.

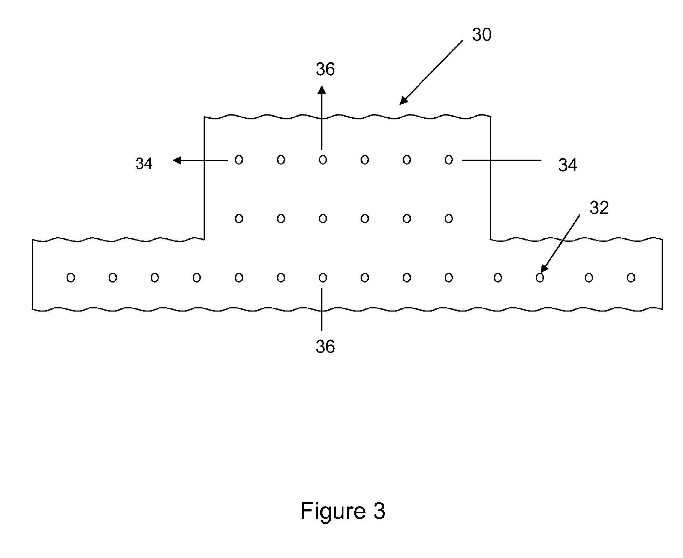

Referring now to Figure 3, a reinforcing pad 30 in accordance with the invention has a different outline shape to the pad 10 of the prior art shown in Figure 1, but that difference is not relevant to the invention. What is relevant is that the pad 30 is penetrated by an array of circular and uniformly-sized air-releasing holes 32 extending over at least a majority of the pad 30. In the embodiment shown, each hole 32 is in one of three parallel rows 34 and moreover is aligned with the neighbouring hole(s) 32 of the neighbouring row 34. Thus, the holes 32 are also in columns 36 that run orthogonally with respect to the rows 34. The spacing between the columns 36 is a little less than the spacing between the rows 34.

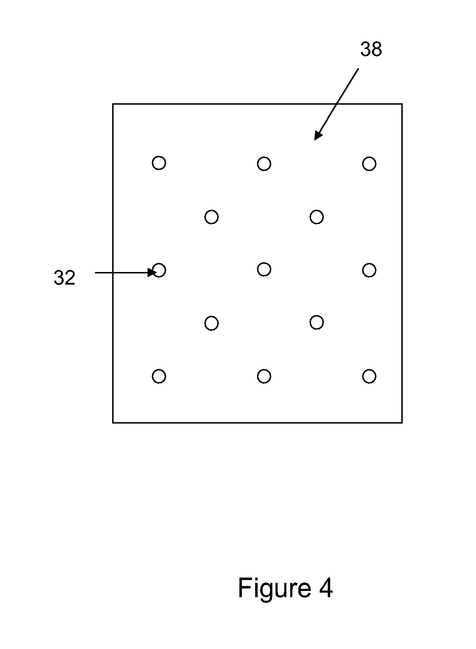

Figure 4 illustrates another embodiment of the invention, in which a section of a reinforcing pad 38 is shown. The pad 38 is penetrated by an array of substantially circular, equidistant and evenly-sized holes 32. The embodiment of Figure 4 differs from that of Figure 3 in that the orthogonally-intersecting lines of holes 32 are disposed diagonally, with the holes 32 arranged in staggered columns or staggered rows. This means that the holes 32 of a row align only in alternating columns and that the holes 32 of a column align only in alternating rows. Moreover, the columns and the rows are equally spaced.

Like the prior art, the pads of the invention are suitably cut from a flexible sheet of a butyl material such as styrene butadiene rubber, optionally faced with woven glass fibre. The holes that characterise the invention may be drilled or punched through the sheet material. The use of holes ensures that when the pads contract upon curing, the pad material is drawn inwardly and substantially evenly from all around the holes. This efficiently distributes stresses in the panel to which the pad is attached, avoiding the localised deformations from which the prior art suffers.

Many variations are possible within the inventive concept, some of which have already been mentioned. Other variations are possible: for example the holes may be disposed such that each hole is surrounded by six equally-spaced holes in a hexagonal arrangement.

Accordingly, reference should be made to the claims rather than the above specific description in understanding the scope of the invention.

## Claims

1. A reinforcing pad for a motor vehicle panel, the reinforcing pad being penetrated by a plurality of air-releasing holes extending over at least a majority of the pad and the material of the pad being shrinkable upon curing to reduce the diameter of the holes, wherein a ring of pad material surrounding and defining each hole is drawn inwardly as the diameter of the hole reduces.

2. A reinforcing pad according to claim 1, wherein the holes are substantially circular.

3. A reinforcing pad according to any preceding claim, wherein substantially all the holes are in an array.

4. A reinforcing pad according to any preceding claim, wherein the holes are substantially equidistant from one another.

5. A reinforcing pad according to any preceding claim, wherein substantially all the holes have the same diameter.

6. A reinforcing pad according to any preceding claim, wherein substantially all the holes have a diameter in the range of 2-16mm.

7. A motor vehicle panel having at least one reinforcing pad according to any preceding claim.

8. A method of manufacturing a heat-shrinkable reinforcing pad for a motor vehicle panel; comprising forming a plurality of air-releasing holes in the pad, the holes extending over at least a majority of the pad.

9. A method according to Claim 8, wherein the holes are formed by drilling or punching.

10. A method of manufacturing a motor vehicle panel, comprising applying to the panel and curing at least one reinforcing pad according to any of Claims 1 to 6.
